# EUROPEAN PATENT APPLICATION

(11) **EP 1 845 675 A2**
(43) Date of publication of application: **17.10.2007**
(21) Application number: 07007646.8
(22) Date of filing: 13.04.2007
(51) Int. Cl.: H04L 12/58

(54) **Browser based user interface for dynamic interaction and control within a mail processing environment**

(30) Priority: 13.04.2006 US 791440 P
(71) Applicant: Bowe Bell + Howell Company, Durham, NC 27713 (US)
(72) Inventor: Mackelprang, Mark G., Cary, NC 27511 (US); Maselli, Michael J., Cary, NC 27519 (US); Spitzing, Roger, St. Clements Ontario N0B2M0 (CA); Tolomei, Victor, Raleigh, NC 27606 (US); Richards, Bob, Ontario N2R-1M5 (CA)
(74) Representative: Zimmermann, Tankred Klaus

(57) **Abstract**

A Resource Connectivity Module (RCM) with an associated interface for network communication to/from a user terminal device provides a uniform user interface for a number of different types of management functions across diverse resources within a mail processing environment. The example uses a browser interface that offers a web interface, to provide an interactive user interface to the mail management functions via the terminal. The RCM implements one or more management control modules, e.g. for reporting and/or control functions in respective function categories. The exemplary RCM also includes one or more resource message handlers communicating with systems of the mail processing environment, e.g. in different protocols. An event handler extracts event data from message data at the message handlers for use by the management control modules and provides necessary data to the message handlers for transmissions responsive to event data from the management control modules.

## Description

### Related Applications

This application claims the benefit of U.S. Provisional Application No. 60/791,440 Filed April 13, 2006 entitled "WEB BASED USER INTERFACE FOR DYNAMIC INTERACTION AND CONTROL WITHIN A MAIL PROCESSING ENVIRONMENT," the disclosure of which also is entirely incorporated herein by reference.

### Technical Field

The present teachings pertain to a management system for mail processing operations, and more specifically, to a web based system for integrating and managing the key operational areas of a mail processing facility through a common framework.

### Background

Mail processing facilities are a vital part of any major enterprise for ensuring effective communication with the external and internal public. Typically, mail processing facilities employ a multitude of people and/or processing devices and systems (resources) for processing the often massive quantities of letters, packages, envelopes, coupon booklets, brochures, post cards, and any other mail items intended for distribution via a mail delivery service. The types of devices found within the mail processing facility may vary from one facility to the next, but may generally include sorters for sorting mail items according to a sort scheme, inserters, cutters, printers and folders for preparing mail items for display and distribution, mail bins for accumulating the multitude of mail items processed, etc. In addition, a multitude of computing devices may be interconnected with the various processing devices within the facility to ensure the proper operation and connectivity of the devices (e.g., connectivity to an application server capable of executing software associated with the device). Furthermore, each of these devices may be supported and/or used by one or more device operators to execute tasks in connection with one or more customers or projects. Suffice to say, this plurality of devices, people, customers, computers, and other interactive resources-operating independently or in conjunction with the other-must be effectively managed to ensure optimal operation of the mail processing environment.

Unfortunately, there exists no effective means of managing the myriad of operational resources and processes occurring within the processing facility at any given moment-especially none that offer a real-time integrated perspective of the various operational aspects of the mailing environment. For instance, while an inserter may operate in connection with software for logging the status of a mail item it processes, this log may not be integrated with the customer service software and database that relates the mail item to a specific customer, or integrated with a internal personnel database for relating the mail item to a specific inserter operator responsible for that mail items' production. Still further, with the myriad of independent operations and devices (e.g., sorters, printers, inserters) that comprise the mail processing facility come a myriad of varying software applications, producing varying data sets, and varying communication protocols all operating in concurrence with the respective device for which it is intended, but disconnected from all other operations within the mail processing facility. Third party software applications which attempt to provide some type of enterprise level perspective of an operation also fail to fully unify the various key operational aspects simply because they cannot easily transact the massive data set translation and exchange process necessary when managing a plurality of independent devices and systems. No common architecture or framework exists for connecting these seemingly independent processes and data sets to increase the overall visibility, track-ability, accountability, measurability and manageability of a mail processing operation via an interactive platform. Furthermore, no single system exists for integrating the key operational processes of a document processing facility into a seamless, common framework that enables real-time expression of the state of the mail processing environment while enabling resource and protocol independence.

### Summary

A server, for example, implementing a Resource Connectivity Module (RCM) with an associated browser interface for network communication to/from a browser enabled user terminal device, provides a uniform user interface for a number of different types of management functions across diverse resources within a mail processing environment.

A mail processing system therefore might include a mail processing environment including diverse systems for performing operations related to processing of mail items, in combination with a server coupled for data communication with the systems of the mail processing environment. The server has a data communication interface for providing network access for a user terminal device. In such a mail processing system, web services are implemented on the server. The web services configure the server to provide a common interactive user interface to the terminal device via the data communication interface. The web services also facilitate server communication, e.g. in an applicable resource protocol compatible with one or more systems of the mail processing environment. The web services thus enable management control of operations via the systems of the mail processing environment or reporting of state data for the systems of the mail processing environment, via the common interactive user interface.

In a specific example, the web services implemented on the server enable the user to access two or more available management functions with respect to the systems of the mail processing environment in a single data communication session with the server. The exemplary data communication interface provides a web browser type interface. The web browser interface transmits web pages to the terminal device via the data communication interface to provide the common interactive user interface. At least one of the web pages may include an embedded executable program, which includes modules corresponding to types of available management functions.

The detailed description below also discloses a system, as may be implemented on one or more servers, for management of resources of the mail processing environment. This system includes a resource connectivity module and an interface coupled thereto, for network communication with a browser on a user's terminal device to provide a user interface in relation to management functions available through the resource connectivity module. The resource connectivity module includes a resource message handler, for communication one or more systems of the mail processing environment, in an appropriate resource protocol. The resource connectivity module includes one or more management control modules. The management control module processes event data regarding operations of the systems of the mail processing environment, in relation to one or more management functions. The resource connectivity module includes an event handler. The event handler may obtain selected data regarding events of operations of the systems of the mail processing environment from data received at the resource message handler and supply the selected event data to the management control module. Alternatively or in addition, the handler may supply data to the resource message handler for communication as resource protocol data to one or more of the systems of the mail processing environment, responsive to event data from the management control module. The network communication interface is coupled to the management control module, so as to provide communication with a browser on the user's terminal device to provide the user interface in relation to the management function(s). The communication with the browser to provide the user interface, together with the resource connectivity module, enable interactive management control and/or reporting of state data for the systems in the mail processing environment, for diverse functions, via the common user interface.

In the example of the resource connectivity module, there are two or more resource message handlers. The first resource message handler is configured for communication of management related resource data in a first of a number of resource protocols used by systems of the mail processing environment. The second message resource handler is configured for communication of management related resource data in a different second one of the resource protocols. Hence, the integrated management interface also extends across diverse protocols for communication with different types of systems of the mail processing environment. The resource connectivity module may also provide a number of different management control modules. If so, each management control module might implement a number of functions of different management categories.

In the example, the network communication interface implements a web-based graphical user interface via the network communication with the browser on the user's terminal device. The interface communicates an executable browser application to the user's terminal device configured to run within the browser on the terminal device. That application has program modules for respective management functions, e.g. corresponding to functions in the categories supported by one or more management control modules in the resource connectivity module. The browser application is configured to enable the terminal device to present selectable icons corresponding to the categories of management functions via the terminal device for user selection and activation. Activation of each program module of the browser application causes the terminal device to communicate with a corresponding one of the management control modules of the resource connectivity module, with regard to a function in a respective one of the categories. The interface also enables the user to access multiple management functions in the various categories, e.g. with respect to one or more of the systems of the mail processing environment, during a single interactive communication with the resource connectivity module.

In addition to the systems summarized above, the present disclosure encompasses methods of a management of mail processing, as well as programmed systems and program products for implementing one or more such methods.

An example of a method for distribution of data relating to management of resources of a mail processing environment involves receiving resource data in a resource based protocol, from systems of the mail processing environment. The data is parsed to form event data regarding operations of the systems of the mail processing environment, for a number of types of common events in the mail processing environment. The event data is supplied to state handlers for a number of management functions. The event data from the state handlers is processed, to compile data regarding the systems of the mail processing environment, for respective management functions. Data compiled for one or more of the respective management functions may be presented to a user via a user interface.

Another example of a disclosed method offers management of one or more resources of a mail processing environment. This method entails receiving a user request to access a selected one of a number of available management functions from a browser on a terminal device of the user, and presenting information regarding the selected management function to the user via the browser. A management request, based on user interaction with the presented information regarding the selected management function, is received from the browser. The received management request includes a request for a control operation of one of the systems of the mail processing environment. The requested control operation corresponds to the selected management function. The method also involves generating event data responsive to the received management request, which relates to the requested control operation. In response to the event data, a command in a resource specific protocol compatible with the one system is sent to instruct the one system to implement the requested control operation.

Additional objects, advantages and novel features of the embodiments will be set forth in part in the description which follows, and in part will become apparent to those skilled in the art upon examination of the following and the accompanying drawings or may be learned by practice of the invention.

### Brief Description of the Drawings

The drawing figures depict one or more implementations in accord with the present teachings, by way of example only, not by way of limitation. In the figures, like reference numerals refer to the same or similar elements.

FIG. 1 depicts operational aspects of an exemplary mail processing facility to which a unified management interface may be applied.

FIG. 2 depicts an exemplary system architecture for facilitating dynamic interaction between a user of a browser and systems of the mail processing environment for a number of diverse management functions.

FIG. 3 depicts an exemplary browser screen shot of the main display used to initiate actions for controlling the mail processing environment or initiating processing and data reporting from the mail processing environment.

FIG. 4 depicts an exemplary resource connectivity module and communication interface at a server, for facilitating dynamic interaction between the browser and the mail processing environment for a number of diverse management functions.

FIG. 5 is a flowchart depicting the exemplary process by which the resource connectivity module interacts with the browser and the mail processing environment.

FIG. 6 depicts a plurality of exemplary state holders for maintaining event data of a resource respective to a plurality of management functions.

FIG. 7 depicts an exemplary process of dynamic interaction between the browser and the mail processing environment.

FIG. 8 depicts an exemplary process of dynamic interaction between the browser and a plurality of mail processing environments.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

Successful operation of a mail processing environment or facility requires the coordination and usage of various resources, including but not limited to, people, data, computers, machines, vendors, materials, etc. Often, these resources need to be utilized concurrently, to fulfill the job processing requirements of the mail processing facility in an efficient manner. Consequently, as in any operation, the coordination of a multitude resources requires effective processes or management controls to be enabled for each of the key operational aspects of the mail processing facility.

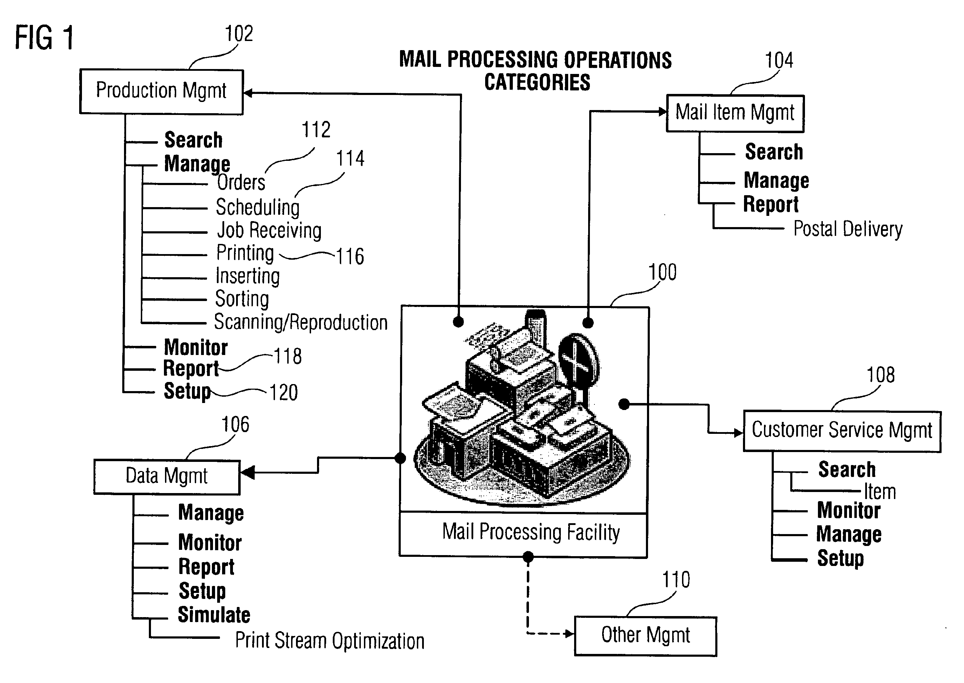

Turning now to the drawings, FIG. 1 depicts operational aspects of an exemplary mail processing facility 100, which requires various types of management and/or management controls. In general, the types of management functions or controls as shown in FIGS. 1-4 in this exemplary model correspond to the following categories:

| Production Management | |
|---|---|
| 102, 202, 302, 402: | Management control with respect to all jobs, resources and employees |

| Item Management | |
|---|---|
| 104, 204, 304, 404: | Management control with respect to every mail item processed |

| Data Management | |
|---|---|
| 106, 206, 306, 406: | Management control with respect to data and how it is organized, utilized, and presented |

| Customer Service | |
|---|---|
| 108, 208, 308, 408: | Management control with respect to customer service functions |

| Other Management | |
|---|---|
| 110, 210, 410 | Management control of other functions to be added the complexity of the mail processing environment increases. |

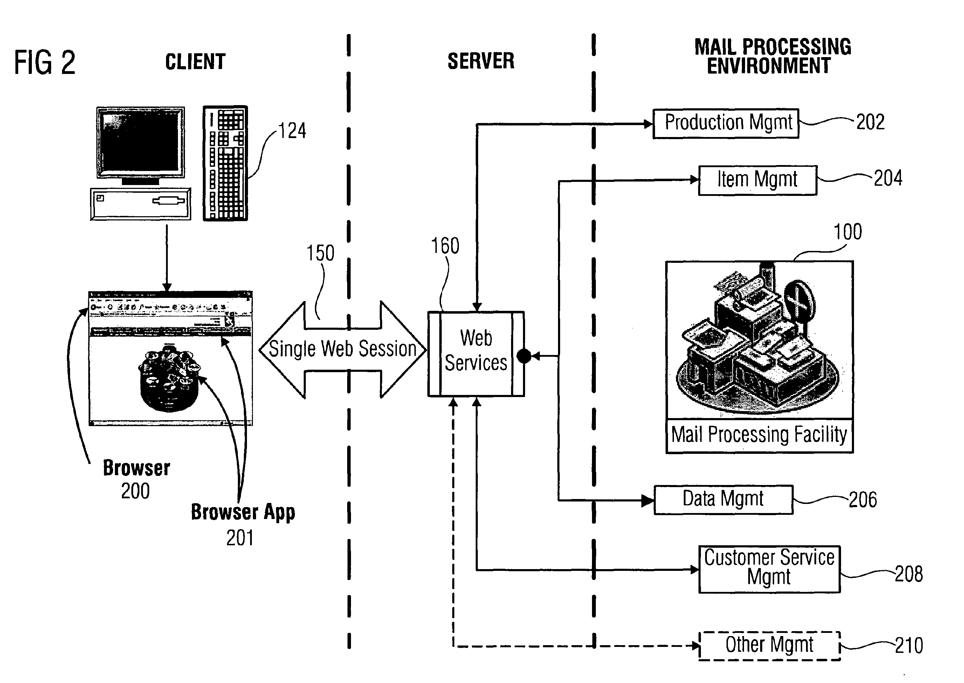

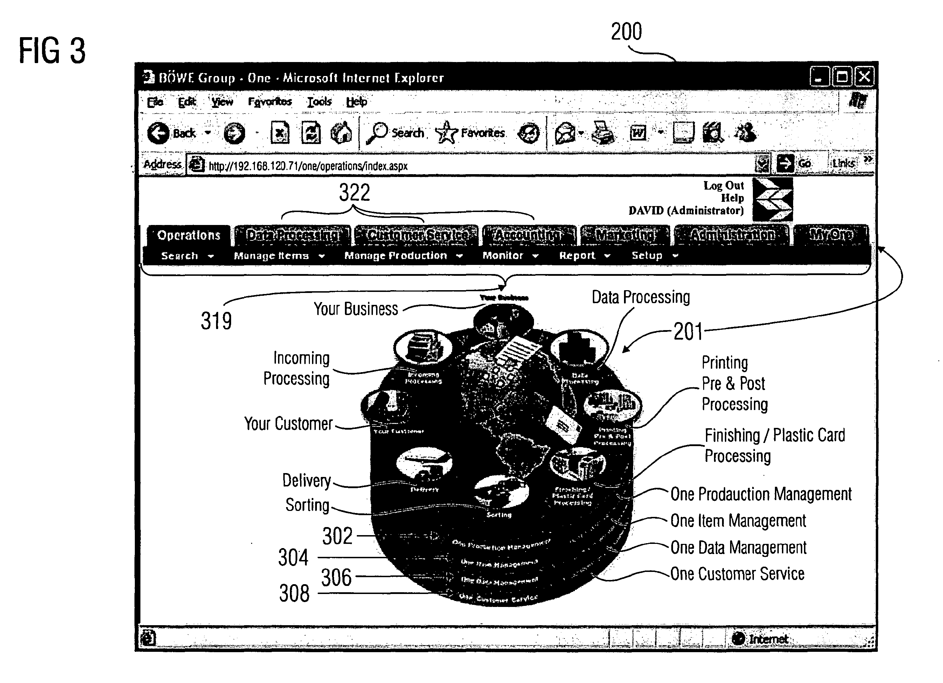

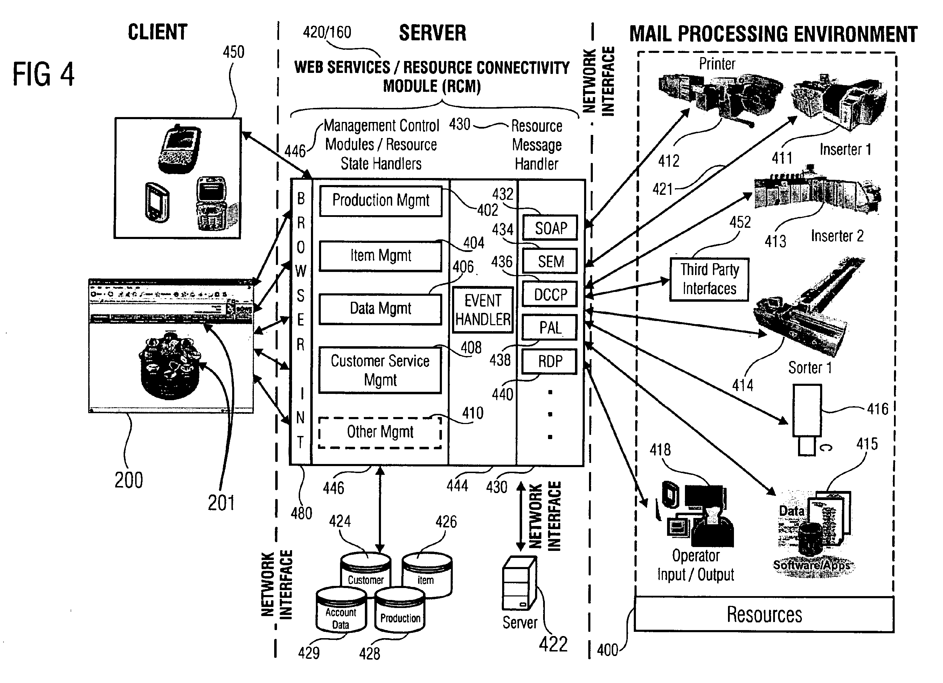

Each of the FIGS. 1-4 use these same terms, as shown above, for consistency. However, the context of the terms is used differently in each figure. In FIG. 1 each term shows the next level of functionality that may be required in order to perform the management functions indicated. These five items 102-110 are representative of the types or categories of management functions and data reporting that may be required to run a mail processing environment. However those skilled in the art may choose to change functions as desired for a different implementation. FIG. 2 depicts the same categories of management functions 202-210 as controls operable programmatically for enabling various operations-i.e., job scheduling, workflow coordination, machine diagnostics, print stream optimization-and extracting and making available various information as it relates to the mail processing environment. FIG. 3 is an exemplary browser screen shot of the main display used to initiate actions which will control the mail processing environment or initiate the processing and data reporting from the mail processing environment. Through this screen the client can initiate software operations within the web services/resource connectivity module to execute the requested function from any of the processes represented by selectable icons or the like shown at 302-308. FIG. 4 shows the same terms but as software processes or control modules 402-408 within the web services/resource connectivity module 160/420.

Other operational aspects may also require management controls 110, such as personnel management, facilities management, inventory management, account management, printstream management, mail composition management, profile management, etc. In some instances, such exemplary other operational aspects 110 may be consolidated management functions. Those skilled in the art will recognize that the key operational aspects of a mail processing facility may vary depending upon the individual needs of that facility and the types of resources employed therein, such as inserters, sorters, cutters, printers, computers, software applications, operators, paper, ink, and resources employed thereby, such as third party applications and interfaces (e.g., Web Services or XML Files). The key management control functions described herein are by way of example only, and in no way limit the scope of the exemplary teachings herein.

Also, within the context of each operational aspect/management control are sub processes of the mail processing facility, each requiring further functions, tasks, activities, procedures, reports, etc. to be effectively executed. For example, to effectively manage production (e.g., a single job/project being performed by an inserter, or all jobs being performed by a plurality of inserters), a manager (or user in general) may need to observe or perform all jobs 112 to be processed and their respective scheduling 114, perform various printing functions 116 in order to complete said jobs, perform production reporting 118, perform various machine/device setup requirements 120 with respect to a given job, etc. Suffice to say, each operational aspect of the mail processing facility 100 requires and corresponds to a particular category of management control functions 102-110, wherein the management control and process reporting may further correspond to a plurality of various other sub processes.

Turning now to FIG. 2, an example of system architecture, for facilitating dynamic interaction between a user and the mail processing facility 100, is depicted at a high-level. As shown, the system is browser-based to allow the user to interact with the mail processing facility, and specifically to provide an easily accessible unitary or integrated user interface to carry out programmatically (e.g., via software execution) the processes required of the above described management controls 102-110. In accordance with the teachings herein, such interaction is facilitated via a single web session 150. Resultantly, the communication between the user of the browser 200 and the mail processing environment 100 need not require multiple instances of a browser to be invoked. Moreover, the underlying functionality exposed by the browser 200 (e.g., management controls 202-210) may be executed without necessitating multiple other instances of a browser 200 (e.g., multiple Microsoft Internet Explorer windows) to accommodate the multitude of functions.

The web interface could offer a relatively simplistic user interface, e.g. based on web pages with links and dialog boxes, etc. However, the example provides an enhanced interactivity via embedded programming for plug-in execution via the browser on the user terminal device. In accord with the teachings herein, the user terminal device or client, may be any device, machine, process or the like capable of rendering a user interface. Exemplary terminal devices may include, but is not limited to, personal computers, server computers, tablet PC's, personal data assistants, cellular phones, Blackberry devices, etc. Regardless of the chosen terminal device or client, the browser represented by the browser window display 200 executes in conjunction with a browser application that further renders an interactive set of icons 201 in the page display. The browser application corresponding to 201 (hereafter referred to as browser application 201) is executable software operable within the structural framework of the browser page. The basic page containing the browser application 201 may reside on the server implementing the web services 160 or a different server (e.g., intranet server, internet server). The browser application 201 provides access to-i.e., the ability to call, invoke or request-functional executables (e.g., APIs, Web Services), which in this case correspond to those specific to the management control categories 102-110 of Fig. 1.

In operation, a user would activate the PC or other terminal device and its generic browser. Through the browser and the terminal's data communication link (e.g. through the Internet or an Intranet), the user would navigate to a web site associated with the mail management web services 160. The web site for example, may be a private site operated by the company operating the mail processing facility 100. The user would interact with the web site server to log-in and then would navigate to a page designated for management functions in relation to the mail processing environment. The data for that page would be sent back to the user's terminal device, and the browser would process the data for display to the user in a manner analogous to FIG. 3.

The page(s) of the management web site could be standard web page formatted information providing the common user interface to the management of the mail processing environment. In the example, the data for the management page would include an imbedded browser application providing graphical interactive icons or the like at 201. The user interface via the browser (with or without the browser application) provides the user with a common interface and a common set of management functions or services (control and/or reporting), which are applicable across a variety of different resources of the mail processing environment.

A more detailed example of the browser application 201 within the framework of the browser providing the display window 200 (hereinafter the browser 200) is shown in FIG. 3. Further discussion of the teachings herein will reveal to those skilled in the art that the teachings need not be limited to implementation via a browser based platform solely, and may indeed be implemented via other operational platforms.

With reference now to FIG. 3, the browser application 201 is structured to provide a common interface to the various key operational aspects/management controls of the mail processing facility 100. The browser application as presented herein is intended to represent any current or future common graphical user interface such as Microsoft® Windows Explorer® or Firefox by Moxilla, and is used to access a server application such as a web page. With this application the client does not have to have custom software (e.g., applets, ActiveX controls) on the PC or terminal used to access the web services/resource connectivity module (FIG. 4) 420/160. The connectivity to the processing system, such as a server, can be achieved over a LAN, MAN, WAN or the world wide web (WWW). The user's browser would interact with the web site server (the RCM server 420/160 or another server) to log-in and then would navigate to a page designated for management functions in relation to the mail processing environment (i.e., as provided via a browser interface 480). The data associated with the management control modules for that page would be sent back to the user's terminal device (e.g., computer, PDA, cell phone 450), and the browser would process the data for display to the user. As will be discussed later, data content displayed to a user's browser relative to the management control modules and mail processing environment is executed via a browser interface module 480 (FIG. 4). As yet another feature of the exemplary teachings, the various terminal devices 450 may also be configured to process alert messages associated with event occurrences in association with or separate from its browser capabilities. So, for example, a cell phone configured as a user's client device may signal an alarm in response to a given activity or occurrence with respect to a particular resource 400.

In the exemplary illustration, the management controls include a production management function 202, an item management function 204, a data management function 206 and a customer service management module 208. Each category of management control function 202-210 is exposed to the user of the browser 200, in the exemplary depiction, as successively ascending stacked disks 302, 304, 306 and 308 provided at 201 by the browser application. Of course alternatively, the various management control functions 202-210 may be exposed as an interactive control menu 319. Regardless of presentation, the modules for the management controls in the browser application may be implemented functionally using known interactive programming languages, such as VBScript, JavaScript, or JScript. Functionality exposed by selective activation of the various management control icons may include, but are not limited to, data exchange and querying, instruction exchange, report generation, task processing, and other logical instructions relative to that particular control. The management controls are not necessarily executed themselves as native functions of the browser 200, such as via embedded web code or the like. Rather, the browser simply exposes a user of a client application, such as the browser, to the various management control functions; enabling said user to simply request or call said functions via a centralized platform offering the web services 160. More regarding the implementation of the various underlying logical instructions will be described in further paragraphs of the description herein. Suffice to say, however, wherein FIG. 1 the management control categories 102-110 are presented categorically, the display management functions 302-308 of FIG. 3 are presented as an interactive interface to actual executable modules for enabling access to operations associated with said logical management control functions 202-208 of FIG. 2.

Consider, for example, the execution and behavior of the browser application 201 in response to user interaction with the mail processing environment. The browser application 201 may respond to a user request or action (e.g., mouse click, mouse rollover, keyboard entry 124) for access to a specific management control represented by a selected one of the interactive display icons shown at 302-308 by calling for the invocation of the various logical instructions related to that particular control. Alternatively, the browser application 201 may respond to a user action by altering the content of the browser 200, such as by refreshing data (e.g., refreshing current production data) or invoking an interactive menu 319 of the various sub processes or sub controls corresponding to the requested management control. For ease of use, the menu of sub processes or controls may be organized into specific tabs, buttons 302, and drop down menus or the like to further delineate the various operational functions and aspects of the mail processing facility 100. Organization of the menu in such a manner promotes easier access and navigation of the various management controls 206-214 and sub controls; in a manner similar to the tree structure shown in FIG. 1. The browser application 201 executes within the browser 200 to centralize the various discrete operational processes and sub processes of FIG. 1 into a common user interface, which in this example is implemented via the web.

The management function modules of the browser application will interact with the web services 160 as a medium for interacting with the various resources of the mail processing environment. All the user needs is a PC or the like with a browser and network communication capability. During the initial phase of the session, the server will send the page, in the example, the initial page with the embedded browser application for the interface shown at 201. Subsequent pages may include variants of the application, e.g. configured to display various results and/or sub-process functions. The communications need not entail device or system specific log-in, commands or protocols, and the one session enables the user to access a number of different management functions that may encompass a variety of systems of the mail processing environment using the common interactive user interface.

Of course, those skilled in the art will recognize that other implementations, designs and nuances of the browser application may be employed in accord with varying mail processing requirements. In addition, practitioners of the art will recognize the advantage of such an interface in allowing convenient organization of the numerous operational processes of a mail processing environment 100. Moreover, practitioners of the art will indeed appreciate the easy adaptability afforded by a browser-based interface, which is highly suitable for change management and location independence. Change management is an inherent feature afforded in browser based applications for enabling easy modification of content, its look and its feel. Indeed, in this respect the user interface as presented herein is not meant to be limiting. Also, location independence is a particularly useful feature for enabling hosted communication-i.e., remote execution of the browser application 201-between the mail processing environment and the client (i.e., terminal and browser application 201/browser 200 executable by a user).

Underlying the one or more management controls 302-308 and/or the various sub controls 319 are one or more logical instructions that enable real-time interaction between the browser 200 and the mail processing facility 100. In particular, the user is able to request the acquisition of real-time data pertaining to the various management controls, as well as instruct the execution of specific tasks to be performed within the mail processing environment. To enable such functionality via the web session 203, one or more Web Services 420/160 are accessible by the management control modules. Web Services, also known as application services to those skilled in the art, is a standard way of integrating user applications using the XML, SOAP, WSDL, UDDI and other communication standards over an Internet protocol backbone, such as XML. In general, Web Services facilitates the exchange of business logic, data, commands, etc. between the management control modules made available by the browser application 201 and the one or more servers, computers, devices, software or other resources utilized within the mail processing facility 215. Of course, those skilled in the art will recognize that Web Services may be employed as a medium for the implementation of any software, be it browser-based, user-interface based, or neither. Furthermore, those skilled in the art will recognize that various other means of implementing the browser application and corresponding modules exist in the art, including Java, J2EE and .NET based solutions and executables. The exemplary teachings herein are not limited to any one means of implementation.

Referring now to FIG. 4, a specific implementation of the Web Service 160 is depicted. More specifically, the exemplary architecture depicts 160 is implemented as a Resource Connectivity Module (RCM) 420 and associated browser interface 480. The RCM 420 is a protocol and resource independent executable that translates between message and data formats for the common interface offered by the browser application 201 and those used by the various systems implementing operations in accord with the management functions 202-210 of the mail processing facility. The executable code implementing the RCM 420 runs on a computer, such as that which may run web or other server type software. The server computer would have Internet connectivity for communication with client devices such as the PC or PDA running the browser 200 and the browser application 201. The server computer running the web services 160 would also be in communication with mail processing facility systems 411-418 implementing the management functions 202-210. These later communications may use facilitates of the public Internet or private network links, such as an Intranet or virtual private network (VPN).

For data received from management functions of the mail processing facility, for example, the RCM 420 translates relevant resource data into event data that is presentable to the client via the browser 200. Essentially, the RCM 420 takes diverse forms of resource data and converts them to a common form of event data which the browser and/or browser application can handle and present in a common manner for all of the different data types. Essentially, this enables a platform independent means of normalizing events respective to a plurality of resources. The event data may be that which describes the current processing or operational event occurring with respect to the one or more resources. For example, event data may be conveyed to a user via the browser 200/browser application 201 as "Inserter 1 inactive as of 13:24:06-Error Code 0067;" sufficient enough information to reveal the current state of the mail processing environment with respect to the inserter resource. Resource data may be one or more data types, generally conveyed in native data form, which are indicative of a processing or operational event occurring with respect to a resource 400. The resource data is also indicative of the processing or operational events respective to the management controls 302-308/key operational aspects 102-110 of the mail processing environment 100. Various resource data may be conveyed by the one or more resources 100, including but not limited to:

| **Processing and/or Operational Occurrence** | |
|---|---|
| Login/Logout (Operator Name/ID) | Each may have an associated timestamp, resource location, status information, etc. |
| Job Start/Stop (Job ID/Name) | |
| Machine Start/Stop (Prod. Time, Machine ID) | |
| Item Completion (Item Count/ID) | |
| Down Code Begin/End (Operator Reason) | |

The resource data is conveyed in the form of messages as received from the one or more resources 400. Generally, the messages are packaged in accord with a specific machine or computing based protocol, such as Remote Desktop Protocol (RDP), Simple Object Access Protocol (SOAP), Simple Explicit Multicast Protocol (SEM), Protocol Adaption Layer (PAL), Datagram Congestion Control Protocol (DCCP), etc. In addition to encapsulating the above resource data, the messages conveyed by the resources 400 may also include various metadata, such as a timestamp, a resource location, status information, authentication data, and the like for providing additional context information pertaining to the resource. In the exemplary figure, the messaging and communication process between the RCM 420/160 and the one or more resources 400 is depicted by the plurality of bi-directional arrows, such as arrow 421 shown extending from Inserter 1 411 through an interface (e.g., network, port). Throughout the discussion of the teachings herein, resource data is assumed to include the conveyed resource data and associated metadata. The plurality of resources may employ a plurality of messaging protocols.

Messages containing resource data are generated by a plurality of resources 400-including equipment, systems, software, processes and/or people-all operable within the mail processing environment 100. Examples of such resources include, but are not limited to: one or more inserters such as Inserter 1 411 and Inserter 2 413, one or more sorters such as Sorter 1 414, one or more printers 412, one or more imaging systems 416 (e.g., cameras, readers) and one or more human resources 418. The human resources may be employed as machine operators, service personnel, inventory managers or any other function. Depending on the role, the various human resources may communicate relevant resource data using handheld devices (e.g., barcode readers or electronic maintenance logs), electronic forms capable of being disseminated over a network and any other such tools for recording and transferring data. Again, any operational or procedural occurrences associated with these resources may be communicated-as a message in accord with one or more protocols-to the RCM 420/160.

Other resources at the disposal of and/or associated with the mail processing environment 100 may be one or more network accessible computers (e.g., servers, job processors) for performing specific functional and/or data processing tasks. Tasks performed by these computers 422, operating independently or in a dedicated fashion, may include billing and logistics processing 414 and human resources management 416. Also, the one or more computers 422 may perform production processing in relation to a job being run by the sorter 414 or inserter devices 411 and 413. Various software/data/applications 415 may be utilized with the one or more computers for performing production processing tasks, including but not limited to mail data preparation tools, mail sorting and distribution software, machine control applications, user control applications, process and workflow management applications, and the like. Still further, one or more third party interfaces 452 may be called upon dynamically for conducting various processing tasks, such as Web services (SOAP), XML file data, or flat files that a customer can feed into the system or can retrieve from the system at a later time. Such data access may be useful for the exchange of mail item data, production data, print data, or expected production data in and out of the mail processing environment. Again, any operational or procedural occurrences associated with these resources may be communicated-as a message in accord with one or more protocols-to the RCM 420/160.

In addition to conveying resource data to the RCM 420, the data may also be compiled and stored into one or more databases corresponding to different resource data types, shown for example as customer, item and event databases 424. So, for example, a computer 422 employed for processing job data relative to Inserter 1 411 may convey such data to a production database 428. Meanwhile a computer 422 dedicated to processing item data as acquired by the one or more vision systems 416 may be conveyed to an item database 426. Other databases may also be employed, such as those for storing customer data 424 (e.g., service data, personnel data or the like) or for storing account data (e.g., print data, profile data, transactional data, etc.). The computers 422 may also convey said data to the RCM module 420 more or less frequently than it is conveyed to the various databases 424-429. In this way, the databases may better regulate the rate of data storage that may occur during execution of the various resources of the mail processing facility. Moreover, as will be described in greater detail later, the RCM may translate said data as it is persistently perceived into relative event data for presentation to the user via the browser application 201.

While not depicted expressly as residing within the mail processing environment 402, those skilled in the art will recognize that the said one or more computers implementing the web services 160 may interact with or be integrated with the other resources (e.g., primary control computers for sorter 414 or inserter 413). In this case, the plurality of arrows representative of the messaging and communication process (e.g., arrow 421) may be transmitted to the RCM 420 for the web services 160 via the one or more integrated computers. Practitioners of the art will recognize the significance of the exemplary figure as depicting the computer(s) for the web services 160 may operate at the same or a separate location from than the actual mail processing facility 402, which illustrates the site independence afforded by a network based communication scheme. Indeed, the server(s) for the web services 160, the computers 422 and the databases 424-428 may be locally or remotely placed relative to the mail processing environment 402. Similarly, the browser 200 and browser application 201 may be executed from a computer that is remotely interfaced with the mail processing environment 402, such as to enable hosted or remote interaction with the various resources 400. The browser interface 480 may itself access a content database or web server that further regulates the display of content to the browser 200 (e.g., images, banners, messages, pop-ups, etc.).

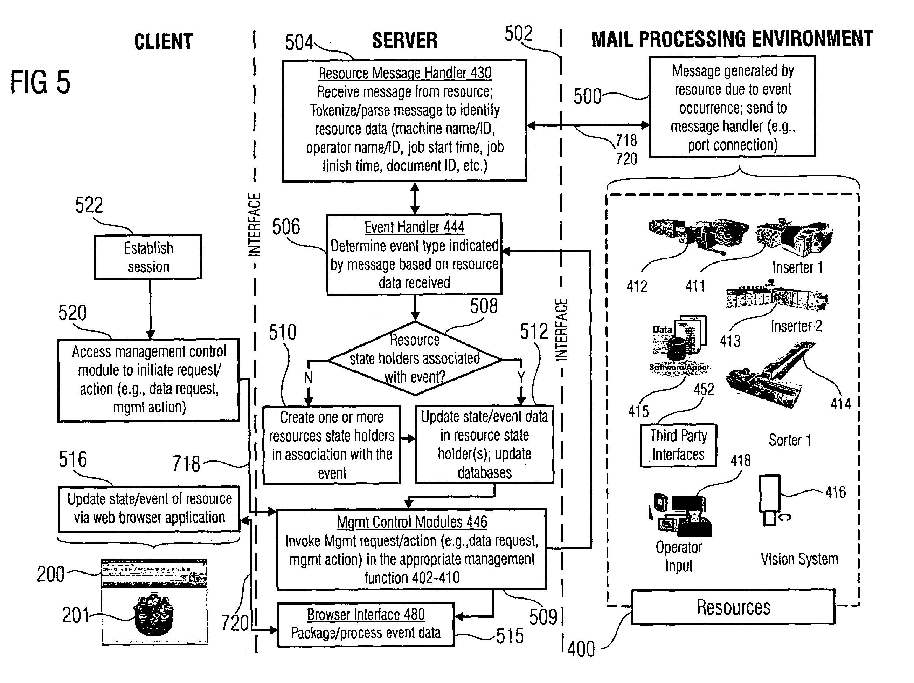

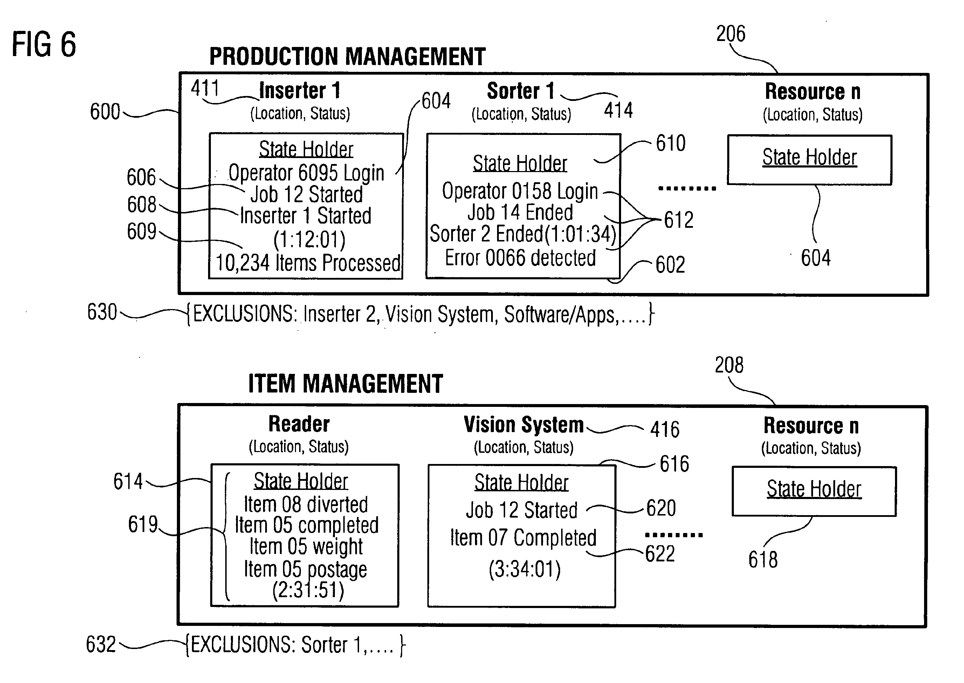

As stated previously, the Resource Connectivity Module (RCM) 420 translates messages received from the one or more resources 400-all containing resource data-into event data. This translation process facilitates and intermediates the communication and interaction between the browser application 201/browser 200 and the resources 400. More regarding this aspect of the teachings is presented with respect again to FIG. 4, and with further reference to FIGS. 5 and 6. FIG. 5 depicts a flowchart representative of the interactive and often concurrent processes between the user of the browser application 201, the mail processing environment 402, and the Resource Connectivity Module 420. Meanwhile, FIG. 6 depicts a plurality of state holder modules operable in connection with the one or more management control modules of the browser application 201 for facilitating real-time interaction with the mail processing environment 402. It will be seen by those skilled in the art with respect to the above stated figures that real-time interaction includes data reporting, process execution with respect to the one or more management control modules 402-410, etc.

Referring once again to FIG. 4, when messages are received from the one or more resources by the RCM 420, they are initially processed by one of a number of resource message handlers 430. Messages are sent by means of an interface-i.e., hardware or network portal-to a complimentary portal of the resource message handler 430 (FIG. 5, event 500). The resource message handler 430 is an executable component or layer of the RCM 420, for receiving, interpreting and subsequently parsing resource data messages (event 504) of the type corresponding to one or more protocol handlers 432-440. The one or more protocol handlers 432-440 are employed for parsing and/or tokenizing the messages as received in their native protocol, where each protocol handler is accessed through a specific portal. Each portal may be implemented as a separate hardware interface or as a logically identifiable port. Hence, for every protocol type employed within the mail processing environment 402, there is a corresponding protocol handler and corresponding portal for receipt of messages of such a protocol. However, multiple resources that use a particular protocol all utilize the same portal and protocol handler. This promotes easier device connectivity and interoperability, particularly because no separate protocol handlers need be devised to accommodate every independent resource 400 operable within the mail processing environment 402. Instead, the multitude of independently operating devices, machines, processes, people, etc. may be categorized in accord with a specific protocol by which they communicate. With this in mind, one skilled in the art will recognize that the RCM 420 may be easily adapted to communicate with any resource by simply including a portal and a protocol handler specific to that resource. Moreover, such capability quickly lends itself to adaptability and change management in situations wherein additional resources are employed, particularly where the portals are logically separate processing ports implemented in software.

During parsing, the resource data encapsulated within the various data fields of the message are extracted, compiled and relayed to a second layer or executable component of the RCM 420, referred to as an event handler 444. The event handler 444 processes the resource data against various rules to determine ultimately what type of event (i.e., production, item, data or customer service management related function) is indicated by the resource data and which management control module 402-410 or resource state handler 444 to pass the event data to, on the basis of that determination (event 506). Pursuant to the interpretation of the resource data, the event handler also packages the resource data into event data. Rules for performing such functionality may be defined and customized using a configuration file or script executable by the event handler. In addition to the above, the configuration file may also define further logic, such as for serializing or queuing event data as it is received by the event handler 444.

As an intermediary component, the event handler 444 facilitates the exchange of data between the resource message handlers and the one or more management control modules 402-410. The event handler extracts event data from message data at the message handlers for use by the management control modules, and it provides necessary data to the message handlers for transmissions responsive to event data from the management control modules. For example, in the upstream direction, the event handler 444 will supply new event data (e.g. for reporting purposes) from a resource message handler, say handler 432, to one or more of the management control modules that need to process that data. In a similar fashion, the event handler 444 responds to new event data (e.g. for control purposes) from a management control module, say module 402, and supplies appropriate data to one or more of the resource message handlers that need to relay corresponding resource data to a system or systems in the mail processing environment 402. Hence, bi-directional communication between the browser application 201 and the one or more resources of the mail processing environment 400 is supported accordingly via the RCM 160/460 as coordinated via the event handler 444.

Given that each protocol resource message handler conveys the same resource data to the event handler, regardless of protocol, only a single configuration file need be required for translation of resource data into event data. Those skilled in the art will recognize that various rules based processing schemes may be employed.

As alluded to in the foregoing paragraph, the event data (formerly resource data when received as one or more messages from one or more resources 400) is further passed on from the event handler 444 to a third layer or executable component of the RCM 420, referred to as a resource state handler 446. The resource state handler 446 invokes the execution of the one or more management control modules 402-410 respective to the type of event indicated by the event data delivered by the event handler 444. Hence, a specific management function or task to be performed-i.e., job scheduling, workflow coordination, machine diagnostics, print stream optimization, data reporting-may be carried out via the one or more management control modules as accessed via the resource state handler 446. Moreover, the resource state handler 446, in addition to enabling execution of various processing tasks respective to the plurality of management control modules 402-410, coordinates the compilation of event data conveyed by the event handler 444 into one or more resource state holders. Each resource state holder corresponds to a specific management control 102-110/402-410, and may be implemented as a temporary and/or persistently updated array of event data associated with a specific resource 400. FIG. 6 depicts a plurality of exemplary resource state holders operating in connection with the one or more functional management control modules 402-410 of the browser application 201. As will be shown, it is access to the one or more state holders from whence the management control modules 202-210 of the browser application 201 may request acquisition of relevant event data for conveyance to the user. Furthermore, it is access to the one or more management control modules 402-410 from whence the management control modules 302-308 of the browser application 201 may request execution of respective management processing tasks.

In FIG. 6, various resource state holders are shown with respect to the production management control function 206 and item management control function 208. The resource state holders may be maintained by or associated with the appropriate management control modules of the resource state handler 446 directly, versus within databases 424-428, so as to enable rapid access to relevant event data as needed. As a specific example, resource state holders 600, 602 and 604 are shown with respect to the Inserter 1 411, Sorter 1 414, and Resource n, respectively. Particular event data conveyed to the resource state holder 600 for Inserter 1 includes the login status of a particular operator 604, the initiation status of a job being run 606, the corresponding initiation status and time of the resource itself 608 and the number of items processed 609. The resource state holder 602 for Sorter 1 conveys a login status of a particular operator 604 along with several indications of failed processing 612. Each of these resource state holders maintains data representative of the present state of the corresponding resource (event data) in the area of production management. So, for example, Inserter 1 corresponds to the production of Job 12, while Sorter 1 corresponds to the production (or current lack thereof) of Job 14.

Various resource state holders are also shown with respect to the item management control module 208. In this example resource state holders 614, 616 and 618 are shown with respect to a barcode reader and a vision system 416. The barcode reader may be a portable device usable by the operator 418 for offline processing of mail items. Particular item data conveyed to state holder 614 includes the item identifier (e.g., barcode data) 619. Item data for the vision system 416 includes the job for which the item is associated 620 and the item identifier 622. Each of these resource state holders maintains data representative of the present state of the corresponding resource (event data) in the area of production management. Of particular interest is the item data conveyed with respect to state holder 616, which corresponds to an item associated with Job 12. Obviously, this item data has some correlation to the state holder 600 of the corresponding production management module 206. As multiple events may occur within the mail processing environment independently or in parallel, it is not uncommon for one or more resource state holders to be affiliated. In this case, the vision system 616 is utilized by Inserter 1 411 for acquiring item data relative to its production tasks.

From the above examples, it is shown that each management control module may have associated with it a plurality of resource state holders, where each state holder further corresponds to a resource respective to that particular operational aspect of the mail processing environment 402. To meet varying mail processing requirements, certain resources may be included and/or excluded for maintenance of event data/state information. For example, Inserter 2 413, vision system 416 and the various software applications 415 are excluded 630 by the resource state handler 446 from generating or maintaining resource state holders for these resources as it pertains to production management 206. Similarly, Inserter 1 411 is excluded 632 for this resource as it pertains to item management 208. Those skilled in the art will appreciate the flexibility afforded by such functionality for enabling one to cater to differing resources 400 and/or mail processing environments 402, as well as increase data processing efficiency.

Having discussed the resource state holders in detail, attention is now directed again to FIG. 5. Once an event type is determined (event 506) the event data must be conveyed accordingly to the resource state handler 446, where it is further processed accordingly by a resource state holder of the particular management control module. When a resource first generates an event, no resource state holder yet exists for this resource and so must be created (events 510 and 512). When a resource state holder is already associated with this particular resource, the new event data occurrence is stored within the applicable resource state holder (event 512). In this way, the resource state holder may persistently convey the most current event data/state information pertaining to the resource. Practitioners of the art may enable the refreshing and/or storage of event data to the resource state holders in accord with various database management techniques, including but not limited to data replication and automated optimization.

Once the resource state holder is created and/or updated accordingly (events 510 and 512 respectively), the one or more management control modules 402-410 may execute in response to receipt of said event (event 509). Exemplary functions executed by the one or more management control modules 402-410 may include, but is not limited to: data conveyance functions such as relaying event data stored within a state holder, data reporting, etc., or task processing functions such as job scheduling, workflow coordination, machine diagnostics, print stream optimization, management control (e.g., regulation of resource usage), etc. Hence, software invocation of the appropriate management actions or requests respective to the resources of the mail processing environment may be facilitated accordingly.

Once the appropriate management action or request is fulfilled, the event data maintained by the one or more resource state holders relative to the management control requiring updating is transmitted via the browser interface 480 (event 515). In this way, the event data is able to be conveyed appropriately to the user of the browser 200 and corresponding browser application 202 (event 516). Additional processing and logical instructions may be performed upon the event data in accord with known interactive programming languages (e.g., JScript, VBScript).

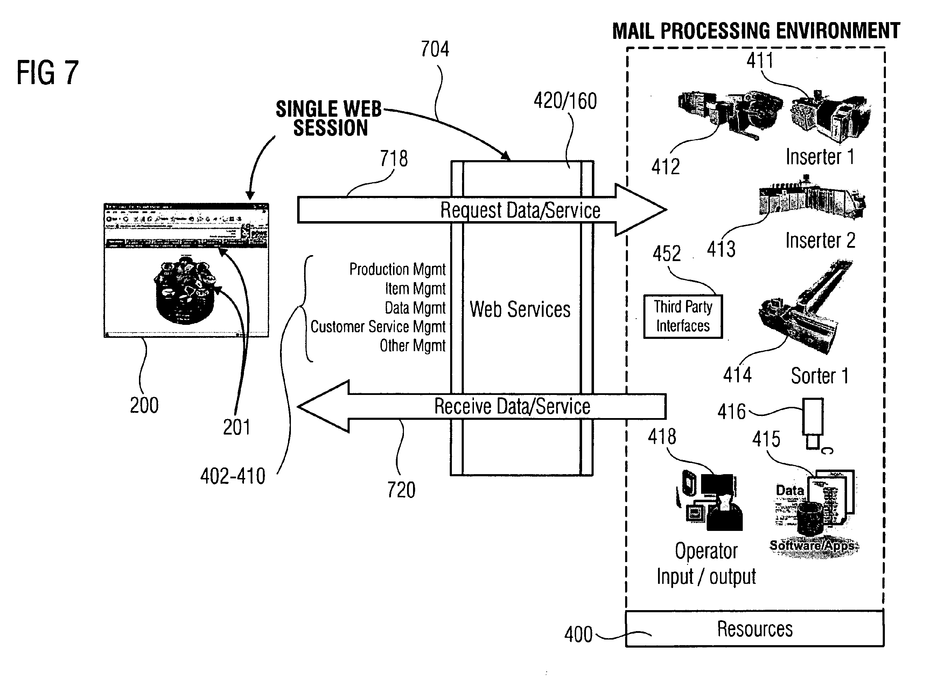

The interaction process-i.e., the execution of the one or more management control modules-may be maintained via a single session. With this in mind, attention is now directed towards FIG. 7, which depicts the various management control modules 702 as they are executed from the browser 200 over a single session 704. The process begins when a user initiates the session with the RCM 420/160 (FIG. 5, event 522) via the browser 200 so that it may access a particular management control module 402-410. Access of the one or more management control modules during the session essentially corresponds to a request for data or execution of a particular service (event 520). More specifically, this corresponds to a request for execution of a particular management control module 402-410, or a request for access to the relevant resource state holder(s) (event 518) associated with the desired management control module. As an example of the former, consider an established session 703 wherein a user (e.g., operator 0158) of the browser application 201 wishes to perform management control with respect to production management, and hence, requires access to functions afforded by the production management module 402. An exemplary production management function may be scheduling 114 of a job (e.g., Job 14) for processing by Sorter 412. Another exemplary function may be the loading of sort scheme, a control file for regulating the way in which the sorter allocates mail items to various mail trays. While these are but a few examples, those skilled in the art will recognize that various other production management control functions may be performed to accord with the requirements of the mail processing environment and the plurality of resources. Furthermore, those skilled in the art will recognize that activation of management control functions, be it for accessing data or invocation of a specific management function, may be initiated by either client (event 520) or mail processing environment (event 500) actions.

As yet another example, consider a request 718 initiated via the browser application 201 to perform a production throughput analysis of a particular job executed by Inserter 1 411. To fulfill this computational request-a production management request in particular-the one or more resource state holders relative to Inserter 1 411 must be accessed. Once this data is acquired, the production management control module 406 could perform the necessary calculations required to generate the throughput analysis. Alternatively, it may call for the execution of a throughput computation module or function that generates a report of this nature based on the acquired event data. This report or output data would then be transmitted back to the user via the single web session and rendered for display (e.g., graphically, alphanumerically) to fulfill the request 720. Indeed, numerous logical instructions may be carried out by the one or more management control modules 702 based upon the event data representative of the resources of the mail processing environment.

Practitioners of the art will readily note that the various processing tasks presented in this example occur discreetly to the user of the browser 200/browser application 201 with no discontinuity of the single web session 806. As such, the browser 200/browser application 201 is enabled to maintain continuous interaction with the mail processing environment. Just as importantly, it will be recognized that the seamless operation of the various management controls 702 facilitates real-time exchange of data; a dynamic interface for acquiring logged (passive) data and active data. The management control modules may be implemented to automatically update requested information according to a specified refresh rate.

Those skilled in the art will also recognize that various interactive processes presented herein may be engaged directly between the selected management control module(s) 702 and the one or more processing devices. However, as an advantage of the present teachings, the resource state holders maintain active event data such as to facilitate easier data access by the user interface on demand, regardless of location of execution. As a network based solution, the computer that executes the browser 200 need not be physically resident within the mail processing environment. In this way, it is possible for a client/user/operator to interact with the mail processing environment via the browser application 201 from a computer not physically connected to the mail processing facility's network infrastructure (e.g., intranet connection). Rather, the Resource Connectivity Module 420 and its associated browser interface 480 may provide a portal by which to enable data interconnectivity-access to servers or other processing devices that communicate directly with the various mail processing systems within the mail processing facility 400-for remote access to the mail processing environment. Those skilled in the art will recognize that such functionality provides numerous mobility and operational advantages, such as providing a convenient means of enabling mail processing operations to be hosted remotely by an operator associated with or appointed by the mail processing facility, or even another third party operations manager.

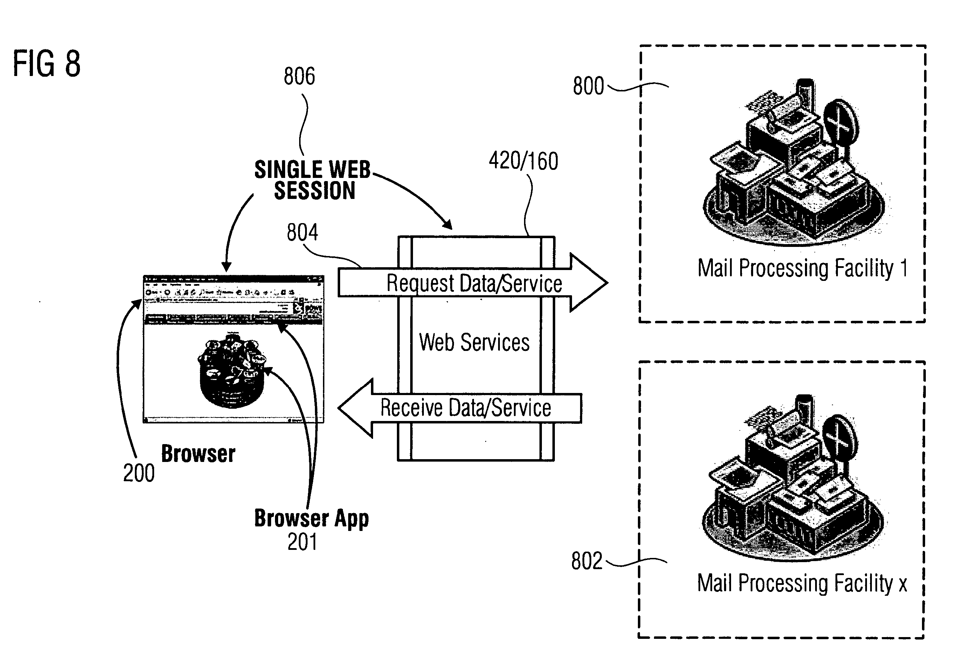

Also, as shown in FIG. 8, the exemplary management control modules exposed by the browser 200/browser application 201 may interact with a plurality of mail processing facilities 800 and 802 in order to fulfill a client request 804. Hence, a single browser interface 200 can provide management control, data capture and visibility capability for a plurality of mail processing facilities 800 and 802 (comprising multiple mail processing devices, computers, software, etc.); the client being allowed to maintain a single web session 806 (i.e., intranet, internet, peer-to-peer, VPN session). This is particularly useful for executing more complex management control and capability, such as multi-site production analysis and comparison, site-to-site item tracking (e.g., a mail item being routed from a document factory, to a presort house, to a mail distribution center), multiple site workflow management, shared cost analysis, mail item load balancing, etc.

In an environment where a plurality of software applications may be utilized, all generating different data outputs and responding to different data inputs, the exemplary teachings enable the various applications to communicate, exchange data, and perform their respective operating functions via a common interactive framework. Regardless of the mail processing environment, the teachings presented herein enable seamless real-time interaction with the mail processing facility. The teachings also promote real time manipulation and usage of data as acquired from the mail processing facility for enabling management control. Moreover, the management controls may be readily adapted, added or adjusted in accordance with a particular management control need for expanded usability.

In the illustrated example, the RCM 420 and browser interface 480 forming the web services 160 are implemented as software running on a computer hardware platform, as might typically be used to implement a server. Such a device typically runs general server type programming and one or more application programs on top of the server programming, to implement the appropriate functionality, in this case the multiple layers and modules of the web services 160 such as shown in FIGS. 4 and 6. Such a platform typically utilizes general purpose computer hardware to perform its respective server processing and to perform the attendant communications via the network(s) and/or data link(s). The computer operating as the web services 160, for example includes a data communication interface for packet data communication via the Internet or other network(s), for its communications with one or more PCs that run the browser application as well as with other computers such as 422-428. The same or other data interfaces enable communications with the systems of the mail processing environment. Each web services computer platform also includes a central processing unit (CPU), in the form of one or more processors, for executing program instructions. The platform also includes program storage for the general purpose programming and the RCM related programming, and it includes data storage for various data files to be processed and/or communicated in relation to the web services functions outlined above. Of course, those skilled in the art will recognize that the web services may be so implemented on a single server or implemented as a number of instances distributed across some number of computers. The hardware elements operating systems and programming languages of such computer platforms that may run the web services programming are conventional in nature, and it is presumed that those skilled in the art are adequately familiar therewith.

Although the discussion above has focused largely on the methodologies, those skilled in the art will recognize that those methodologies may be embodied in specific equipment, systems or devices. Also, many of the operations described above may be carried out by processing and/or associated execution of software, firmware, or microcode operating on processors or computers of any type used to provided the functionalities of the servers, client devices and/or programmed control for the various manufacturing (mail processing) elements shown in the system drawings. Additionally, code for implementing such operations may be in the form of computer instruction in any form (e.g. source code, object code, interpreted code, etc.) stored in or carried by any computer or machine readable medium.

Program aspects of the technology may be thought of as "products" typically in the form of executable code and/or associated data that is carried on or embodied in a type of machine readable medium. Media include any or all of the memory of the computers, processors or the like, or associated modules thereof, such as various semiconductor memories, tape drives, disk drives and the like, which may provide storage at any time for the software programming. All or portions of the software may at times be communicated through the Internet or various other telecommunication networks. Such communications, for example, may enable loading of the software from one computer or processor into another. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software.

Terms regarding computer or machine "readable medium" (or media) as used herein therefore relate to any physical medium or transmission medium that participates in providing instructions or code or data (e.g. license records or license related information) to a processor for execution or processing. Such a medium may take many forms, including but not limited to, non-volatile media and volatile media as well as carrier wave and physical transmission media

Those skilled in the art will recognize that the concepts disclosed herein have wide applicability and may admit of a wide range of modifications. While the foregoing has described what are considered to be the best mode and/or other preferred embodiments, it is understood that various modifications may be made therein and that the invention or inventions disclosed herein may be implemented in various forms and embodiments, and that they may be applied in numerous applications, only some of which have been described herein.

## Claims

1. A mail processing system, comprising:
a mail processing environment including a plurality of diverse systems for performing operations related to processing of mail items;
a server coupled for data communication with the systems of the mail processing environment and having a data communication interface for providing network access for a user terminal device; and
web services implemented on the server for configuring the server to provide a common interactive user interface to the terminal device via the data communication interface, communication occurring in a resource protocol to the diverse systems of the mail processing environment, and to enable at least one management control of operations via the systems of the mail processing environment or reporting of state data for the systems of the mail processing environment via the common interactive user interface.

2. The mail processing system of claim 1, wherein the web services implemented on the server enable the user to access a plurality of management functions with respect to the systems of the mail processing environment in a single data communication session with the server.

3. The mail processing system of claim 1, wherein the data communication interface comprises a web browser interface.

4. The mail processing system of claim 3, wherein the web browser interface transmits web pages to the terminal device via the data communication interface to provide the common interactive user interface.

5. The mail processing system of claim 4, wherein at least one of the web pages includes an embedded executable program comprising modules corresponding to management functions available through the server.

6. The mail processing system of claim 1, wherein the web services implemented on the server comprise a resource connectivity module.

7. The mail processing system of claim 6, wherein the resource connectivity module comprises:
a) a resource message handler, for communication of management related resource data with the systems of the mail processing environment, in the resource protocol;
b) a management control module for processing event data for the systems of the mail processing environment; and
c) an event handler for obtaining selected data regarding events of operations of the systems of the mail processing environment from data received at the resource message handler and supplying the selected event data to the management control module and responsive to event data from the management control module for supplying data to the resource message handler for communication to one or more of the systems of the mail processing environment.

8. A system for management of resources of a mail processing environment, the system comprising:
a resource connectivity module comprising:
a) a resource message handler, for communication of management related resource data with systems of the mail processing environment, in a resource protocol compatible with one or more of the systems of the mail processing environment;
b) a management control module for processing event data regarding operations of the systems of the mail processing environment in relation to one or more management functions; and
c) an event handler for:
i) obtaining selected data regarding events of operations of the systems of the mail processing environment from data received at the resource message handler and supplying the selected event data to the management control module, and/or
ii) supplying data to the resource message handler for communication as resource protocol data to one or more of the systems of the mail processing environment, responsive to event data from the management control module; and
an interface coupled to the management control module, for network communication with a browser on a user's terminal device to provide a user interface in relation to the one or more management functions via the terminal,
wherein the network communication with the browser to provide the user interface and the resource connectivity module enable interactive management control and/or reporting of state data for the systems in the mail processing environment via the user interface.

9. The system of claim 8, wherein:
the resource message handler is a first resource message handler, and the first resource message handler is configured for communication of management related resource data in a first of a plurality of resource protocols;
the system further comprises a second message resource handler configured for communication of management related resource data in a second of the plurality of resource protocols; and
the second resource protocol is different from the first resource protocol.

10. The system of claim 8, wherein the interface implements a web-based graphical user interface via the network communication with the browser on the user's terminal device.

11. The system of claim 8, wherein:
the interface communicates a browser application to the user's terminal device configured to run within the browser on a user's terminal device,
the browser application having a plurality of program modules for respective management functions,
the browser application is configured to enable the terminal device to present selectable icons corresponding to the first and second categories of management functions via the terminal device for user selection and activation, and
activation of each program module of the browser application causes the terminal device to communicate with the management control modules of the resource connectivity module, with regard to a function in a respective one of the first and second management function categories.

12. The system of claim 8, wherein the interface enables user access to multiple management functions during a single interactive communication with the resource connectivity module.

13. The system of claim 8, wherein each of the management control module causes the resource connectivity module to implement resource a state holder for compilation of event data related to one or more management functions.

14. The system of claim 13, wherein each resource state holder is configured to compile a temporary and/or persistently updated array of event data associated with a specific resource of the mail processing environment.

15. The system of claim 13, wherein the management control module further causes the server to process event data from the state holder and communicate resulting processed data related to a management function via the interface.

16. The system of claim 8, wherein the event data comprises data relating to a predetermined set of possible events common to the systems of the mail processing environment.

17. A method for distribution of data relating to management of resources of a mail processing environment, comprising steps of:
receiving resource data in a resource based protocol, from systems of the mail processing environment;
parsing the data to form event data regarding operations of the systems of the mail processing environment, for a plurality of preselected types of common events in the mail processing environment;
supplying the event data to state handlers for a plurality of management functions;
processing event data from the state handlers, to compile data regarding the systems of the mail processing environment, for respective management functions; and
presenting compiled data for one or more of the respective management functions to a user via a user interface.

18. The method of claim 17, wherein the step of receiving resource data comprises:
receiving resource data from a first of the systems of the mail processing environment in a first resource based protocol; and
receiving resource data from a second of the systems of the mail processing environment in a second resource based protocol different from first resource based protocol.

19. The method of claim 17, wherein the user interface comprises one or more of a browser and a terminal device.

20. The method of claim 17, wherein the step of presenting compiled data comprises sending one or more web pages containing the compiled data for the one or more of the respective management functions to a terminal device running a web browser.

21. The method of claim 17, wherein the step of presenting compiled data comprises:
presenting compiled data for a first respective management function to the user , during a data communication session; and
presenting compiled data for a second respective management function to the user , during said data communication session.

22. The method of claim 21, further comprising:
receiving a user input control command from the user, during said data communication session, with respect to the first respective management function; and
generating a message in the resource based protocol, implementing the control command with respect to the first respective management function; and
transmitting the message in the resource based protocol implementing the control command, to at least one of the systems of the mail processing environment;

23. A server system programmed to implement the method of claim 17.

24. A product comprising an executable program and a computer readable medium embodying the program, wherein execution of the program causes a server computer to implement the method of claim 17.

25. A method of management of one or more resources of a mail processing environment, the system comprising:
receiving a user request to access a selected one of a plurality of management functions from a browser on a terminal device of the user;
presenting information regarding the selected management function to the user via the browser;
receiving a management request based on user interaction with the presented information regarding the selected management function, from the browser, the received management request comprising a request for a control operation of one of a plurality of systems of the mail processing environment corresponding to the selected management function;
generating event data responsive the received management request, relating to the requested control operation of the one system of the mail processing environment; and
responsive to the event data, sending a command in a resource specific protocol compatible with the one system, to instruct the one system to implement the requested control operation.

26. The method of claim 25, wherein the step of presenting information regarding the selected management function to the user via the browser comprises sending a web page containing the information to the terminal device for presentation of the web page via the browser.

27. The method of claim 26, wherein:
the web page includes an embedded executable program comprising modules corresponding to categories of the management functions; and
execution of one of the modules of the executable program on the terminal device facilitates user input of the selected management function and transmission of the management request.

28. The method of claim 25, wherein:
the steps are performed during a communication session with the user via the browser on the terminal device; and
the method further comprises repeating at least the receiving and presenting steps with respect to a different selected one of the management functions, during that communication session.

29. A server system programmed to implement the method of claim 25.

30. A product comprising an executable program and a computer readable medium embodying the program, wherein execution of the program causes a server computer to implement the method of claim 25.
